# EUROPÄISCHE PATENTSCHRIFT

(11) **EP 4 437 242 B1**
(45) Veröffentlichungstag und Bekanntmachung des Hinweises auf die Patenterteilung: **09.09.2026**
(21) Anmeldenummer: 22813890.5
(22) Anmeldetag: 21.11.2022
(51) Int. Cl.: F16C 17/04, F16H 57/04, F16C 33/10, F16H 57/08

(54) **PLANETENGETRIEBE MIT EINER VERDREHSICHERUNGEN AUFWEISENDEN ANLAUFSCHEIBE**
PLANETARY GEARBOX WITH A THRUST WASHER HAVING ANTI-ROTATION MEANS
BOÎTE DE VITESSES À TRAINS PLANÉTAIRES AVEC UNE RONDELLE DE BUTÉE AYANT DES MOYENS ANTI-ROTATION

(30) Priorität: 26.11.2021 DE 102021131137
(43) Veröffentlichungstag der Anmeldung: 02.10.2024
(73) Patentinhaber: Schaeffler Technologies AG & Co. KG, 91074 Herzogenaurach (DE)
(72) Erfinder: SEUBERT, Manuel, 90542 Eckental (DE); SCHIMPF, Ralph, 90478 Nürnberg (DE); ANTÁLEK, Martin, 908 49 Kátov (SK)
(74) Vertreter: Schaeffler Technologies
(86) Internationale Anmeldenummer: PCT/DE2022/100868
(87) Internationale Veröffentlichungsnummer: WO 2023/093939

(56) Entgegenhaltungen:
- EP-A2- 1 580 459
- JP-A- 2001 082 456
- US-A1- 2016 032 970
- US-B2- 7 252 615

## Beschreibung

### Gebiet der Erfindung

Die Erfindung betrifft ein Planetengetriebe mit einem Gehäuse, mit Planetenrädern und mit Planetenlagerungen, wobei die Planetenräder mittels der Planetenlagerungen rotierbar um eine axial ausgerichtete Planetenachse an dem Gehäuse gelagert sind und wobei zumindest eine der Planetenlagerungen aus wenigstens einem axial ausgerichteten Planetenzapfen und einer Anlaufscheibe gebildet ist, wobei die Anlaufscheibe axial zwischen dem Planetenrad und dem Gehäuse auf dem Planetenzapfen sitzt sowie mit einer Verdrehsicherung gegen Verdrehen um die Planentenachse und relativ zu dem Gehäuse formschlüssig gehalten ist.

### Hintergrund der Erfindung

Ein derartiges Planetengetriebe ist mit DE 40 09 968 A1 offenbart. Die Anlaufscheiben sind Axial-Gleitlager der Planetenlager für das jeweilige Planetenrad. Das Planetenrad ist mittels des Planetenlagers radial auf einen Planetenbolzen gelagert. Die Anlaufscheiben sitzen axial zwischen dem Planetenlager, dem Planetenrad und dem Planetenträger. Über die Oberfläche der jeweiligen Anlaufscheibe wird eine Lagerfläche definiert, welche zumeist als Gleitlagerfläche ausgeführt ist. Die Gleitlagerflächen sind von Fall zu Fall anders ausgeführt. Die Anlaufscheiben sind mit laschenartig ausgebildeten Verdrehsicherungen versehen. Dadurch wird verhindert, dass sich die jeweilige Anlaufscheibe gegenüber dem Planetenträger verdreht und einerseits Reibverschleiß in der Berührungszone zwischen der harten Anlaufscheibe und dem zumeist nicht gehärteten Planetenträger vermieden. Andererseits werden nicht definierte Reib- bzw. Gleitzustände zwischen Anlaufscheibe und dem Planetenrad vermieden.

Die US 2016/ 032 970 A1 zeigt eine Anlaufscheibe mit Schmiertaschen.

Die EP 1 580 459 A2 zeigt eine verdrehgesicherte Anlaufscheibe.

Die JP 2001 082456 A zeigt eine Ringscheibe, deren ebene Oberfläche mit mehreren radial verlaufenden Rillen in vorgegebenen Winkeln versehen ist, wobei diese Rillen als Durchflusswege für Schmieröl dienen und der Eingangsbereich der Rillen breit und der Ausgangsbereich schmal ausgestaltet ist.

Die US 7 252 615 B2 zeigt ein Schmiersystem für einen Planetenradträger eines Automatikgetriebes, bei dem der Planetenradträger einen Käfigabschnitt und einen Flanschabschnitt mit dazwischen montiertem Planetenrad aufweist. Das System umfasst eine Schmiermittelquelle, eine Hauptwelle mit radialer Öffnung zum Zuführen von Schmiermittel, eine benachbarte Sonnenradwelle mit radialer Öffnung zum Weiterleiten des Schmiermittels sowie eine Dichtung oder Buchse zwischen Sonnenrad und Hauptwelle zur Führung des Schmiermittels. Der Käfigabschnitt enthält eine erste und eine diese schneidende zweite Nut, um das Schmiermittel aufzunehmen und zum Ritzellager zu leiten; der Flanschabschnitt besitzt eine dritte Nut zur weiteren Ableitung des Schmiermittels. Die Schnittstelle zwischen erster und zweiter Nut bildet einen Damm, der verhindert, dass Schmiermittel vom Planetenradträger weggeleitet wird.

### Beschreibung der Erfindung

Die Aufgabe der Erfindung ist es, ein Planetengetriebe zu schaffen, das sich einfach und kostengünstig herstellen lässt.

Die Aufgabe ist nach dem Gegenstand des Anspruchs 1 gelöst.

Mit der Erfindung ist vorgesehen, dass die Anlaufscheibe an einer dem Gehäuse zugewandten ersten Seite erste Anlaufflächen und an einer einem Planetenrad zugewandten zweiten Seite umfangsseitig zu den ersten Anlaufflächen versetzte zweite Anlaufflächen aufweist. Außerdem ist vorgesehen, dass jeweils axial rückseitig der Anlaufflächen ein rinnenartig geformter Schmierkanal an der Anlaufscheibe ausgebildet ist. Der Schmierkanal verläuft aus Richtung des Planetenzapfens radial nach außen bis an einen die Anlaufscheibe radial außen begrenzenden Rand hin.

Erfindungsgemäß ist vorgesehen, dass wenigstens eine der Verdrehsicherungen radial vom Planetenzapfen weg gerichtet radial über eine das Planetenrad außen begrenzende Kontur des Planetenrades hinaus hervor steht. Dabei verläuft der zumindest einseitig durch die Anlaufscheibe begrenzte Schmierkanal radial nach außen bis an einen die Anlaufscheibe radial außen begrenzenden Rand der Verdrehsicherung hin.

Mit einer Ausgestaltung der Erfindung ist vorgesehen, dass der Schmierkanal jeweils zwischen zwei umfangsseitig zueinander benachbarten der ersten Anlaufflächen der Anlaufscheibe verläuft.

Mit einer weiteren Ausgestaltung der Erfindung ist vorgesehen, dass der Schmierkanal an wenigstens einer der Verdrehsicherungen einer Anlaufscheibe ausläuft.

Mit einer Ausgestaltung der Erfindung wird eine Ausführung des Planetengetriebes vorausgesetzt, in welchem zumindest ein Gehäuseabschnitt des Gehäuses als Planetenträger ausgebildet ist und die Gehäuseabschnitte axial mittels Verbindungsstegen verbundene Trägerwangen des Planetenträgers sind. In einem derartigen Planetengetriebe ist vorgesehen, dass der Anschlag ein axial aus einer Trägerwange des Planetenträgers in Richtung einer weiteren Trägerwange hervorstehender Verbindungssteg ist.

Mit einer Fortbildung der vorhergenannten Ausgestaltung ist vorgesehen, dass jeder der Verbindungsstege jeweils mindestens einen Anschlag für eine an ein und derselben Anlaufscheibe ausgebildeten Verdrehsicherung von zwei an der Anlaufscheibe ausgebildeten Verdrehsicherungen ist.

Außerdem ist mit einer weiteren Fortbildung vorgesehen, dass zwei voneinander abgewandte Flanken des Planetenträgers die Anschläge für die Verdrehsicherungen einer Anlaufscheibe sind. Die Anschläge sind umfangsseitig zwischen zwei benachbarten Verbindungsstegen und an den Planetenzapfen anschließend ausgebildet.

Eine weitere Ausgestaltung der Erfindung sieht vor, dass die Anlaufscheibe zwei radial von einem Scheibenkörper abgehende und umfangsseitig um eine Planetenachse eines Planetenrades zueinander benachbart am Scheibenkörper ausgebildete Verdrehsicherungen aus einem Material der Anlaufscheibe aufweist. Die Verdrehsicherungen sind vorzugsweise einmaterialig mit einem Scheibenkörper der Anlaufscheibe ausgebildet. Das Material ist vorzugsweise Stahlblech. Eine erste der Verdrehsicherungen liegt an einem ersten Anschlag an. Eine zweite und an der gleichen Anlaufscheibe ausgebildete zweite Verdrehsicherung liegt an einem dem ersten Anschlag gegenüberliegenden zweiten Anschlag an. Der jeweilige Anschlag ist vorzugsweise an einem Verbindungssteg eines Planetenträges des Planetengetriebes ausgebildet. Über den jeweiligen Verbindungssteg sind zwei Trägerwangen des Planetenträgers miteinander verbunden.

Die Erfindung sieht also eine Anlaufscheibe für das Planetengetriebe vor. Die Anlaufscheibe weist erste Auswölbungen und zu den ersten Auswölbungen umfangsseitig benachbarte zweite Auswölbungen auf. Die ersten Anlaufflächen sind durch erste Auswölbungen der Anlaufscheibe voneinander getrennt. Die zweiten Anlaufflächen sind seitens der zweiten Seite und rückseitig an den ersten Auswölbungen ausgebildet und durch zweite Auswölbungen der Anlaufscheibe voneinander getrennt. Die ersten Anlaufflächen sind seitens der ersten Seite und rückseitig an den zweiten Auswölbungen ausgebildet. Jeweils eine erste Auswölbung und eine zweite Auswölbung sind durch einen gekröpften Abschnitt miteinander verbunden, über den der axiale Versatz der Anlaufflächen gewährleistet ist. Die Auswölbungen erstrecken sich rinnenartig aus Richtung der Planetenzapfen radial nach außen bis an einen die Anlaufscheibe radial außen begrenzenden Rand der Anlaufscheibe. Die Auswölbungen setzen sich bevorzugt radial über einen Außenumfang des Scheibenkörpers der Anlaufscheibe hinaus und weiter zumindest teilweise in den Verdrehsicherungen bzw. vorzugsweise bis zur Außenkontur der Anlaufscheibe an den Verdrehsicherungen hin fort.

An der Anlaufscheibe sind anstelle von nur einer Verdrehsicherung zwei Verdrehsicherungen ausgebildet. Daraus ergeben sich mehr Möglichkeiten der Sicherung der Anlaufscheibe gegen Verdrehung. Auf gezielt ausgerichtete Montage der Anlaufscheibe kann vorteilhaft weitestgehend verzichtet werden. Die Anlaufscheibe wird mittels der jeweiligen Verdrehsicherung wahlweise an einem oder an zwei Anschlägen gegen Verdrehen abgestützt. Durch die vorgenannten Ausbildungen der Axialscheibe ist diese an beiden axial gerichteten Stirnseiten gleich und auch hinsichtlich der Verdrehsicherung spiegelbildlich symmetrisch ausgeführt, so dass diese ohne die richtungsorientierte Montage in den Planetenträger montiert werden kann.

Außerdem ist vorgesehen, dass der Anschlag ein die Gehäuseabschnitte, vorzugsweise die Trägerwangen eines Planetenträgers, miteinander verbindender Verbindungssteg ist, der alternativ auch mehr als einen Anschlag bildet. Da diese Verbindungsstege ohnehin vorhanden sind, kann auf die aufwändige Herstellung von zusätzlichen Formschlussvertiefungen für den Eingriff der Verdrehsicherungen der Anlaufscheiben vorteilhaft verzichtet werden.

Gehäuse sind Gehäuse von Fahrzeuggetrieben, von Elektromotoren oder von elektromotorisch betriebenen Antriebseinheiten sind aber alternativ auch Planetenträger und Differenzialkörbe, insbesondere Differenzialkörbe von Stirnraddifferenzialen. Gehäuseabschnitte sind dementsprechend z.B. Lagerschilde, Trennwände, massive Gehäuse, Hälften von Differenzialkörben oder Trägerwangen von Planetenträgern.

Mit einer Ausgestaltung der Erfindung ist vorgesehen, dass der Anschlag zumindest teilweise axial in eine Lücke zwischen umfangsseitig um die Zentralachse verteilten und zueinander benachbarten der Planetenräder ragt. Somit muss vorteilhaft kein zusätzlicher Aufwand für die Lageorientierung der Verdrehsicherungen betrieben werden. Die ohnehin umfangsseitig zueinander benachbarten Verbindungsstege können als Anschläge genutzt werden.

Die erfindungsgemäße Anlaufscheibe kann so gestaltet sein, dass der Anschlag sich radial an den Planetenzapfen anschließt und radial über eine Kontur des Gehäuses hinaus hervorsteht. Die Lage des Anschlags ist also nicht wie bei bekannten Planetenlagerungen im Wesentlichen an den Umfang des Planetenrades gebunden, sondern ist davon unabhängig. Dementsprechend bietet sich eine Vielfalt an Gestaltungsmöglichkeiten für die Verdrehsicherung und den Anschlag an. So ist beispielsweise mit einer Ausgestaltung der Erfindung vorgesehen, dass der Anschlag zwei voneinander weg und dabei in einander entgegengesetzte Umfangsrichtung weisende Anschlagseiten aufweist, welche dem Anschlagen jeweils einer anderen Verdrehsicherung von ein und derselben Anlaufscheibe dienen.

Die Auswölbungen an den Anlaufscheiben schaffen im Zusammenwirken mit einem weiteren Bauteil Schmierkanäle, welche wahlweise durch weitere Anlaufscheiben, durch Gehäuseabschnitte, Abschnitte des Planetenträgers bzw. Flanken von Planetenrädern begrenzte Kanäle bilden. Durch diese Kanäle kann ohne weiteren zusätzlichen Aufwand an die Anlaufscheibe gelangendes Schmieröl von den Anlaufscheiben innen nach radial außen gefördert werden.

In Planetengetrieben des Standes der Technik sind die Anlaufscheiben aus den bereits im Kapitel Hintergrund der Erfindung genannten Gründen mit einer Verdrehsicherung versehen. Dabei greift die Verdrehsicherung formschlüssig in eine an dem jeweiligen Gehäuse vorbereitete Formschlussvertiefung wie z.B. in ein Loch, eine Aussparung oder eine Vertiefung ein. Dementsprechend müssen die Anlaufscheiben bei der Montage der Planetenlagerungen mit den Verdrehsicherungen zu der Formschlussvertiefung ausgerichtet, gehalten und zugeführt werden. Das ist häufig mit erhöhtem Aufwand verbunden einerseits, weil die jeweilige Formschlussvertiefung in das Gehäuse eingebracht werden muss und andererseits, weil das gerichtete Zuführen gesonderte Vorrichtungen und Arbeitsgänge für die Montage erfordert.

Bei der Montage von Planetengetrieben wird eine Handhabung von Planetenrädern zusammen mit dem Planetenlager (Nadel- oder Rollenlager), mit dem Planetenzapfen/Planetenbolzen und mit der Anlaufscheibe als Baugruppe angestrebt. Das ist durch eine Umsetzung der Erfindung mit den erfindungsgemäßen Planetengetrieben möglich.

### Beschreibung der Zeichnungen

Die Erfindung wird nachfolgend anhand von Zeichnungen näher beschrieben.

Axial ist mit der Zentralachse 9 des Planetengetriebes 1 oder 21 gleichgerichtet. Radial ist quer zur axialen Richtung.
**Figur 1** zeigt ein Ausführungsbeispiel eines Planetengetriebes 1 in einer Gesamtansicht mit seitlichem Blick auf eine Seite des Planetengetriebes 1.
**Figur 2** zeigt ein Detail aus Figur 1 mit einer Planetenlagerung 4, vergrößert und nicht maßstäblich dargestellt.
**Figur 3** zeigt ein Detail der in Figur 1 dargestellten Anordnung in einer freigeschnittenen Ansicht, in welcher der in Figur 1 im Vordergrund befindliche Grundkörper 33 einer Trägerwange 12 weggelassen ist.
**Figur 4** zeigt ein nicht erfindungsgemäßes Ausführungsbeispiel eines Planetengetriebes 21 in einer Gesamtansicht mit seitlichem Blick auf eine Seite des Planetengetriebes 21.
**Figur 5** zeigt ein Detail aus Figur 4 mit einer Lagestelle eines Planetenrades 3, vergrößert und nicht maßstäblich dargestellt.
**Figur 6** zeigt schematisch eine Baugruppe des Planetengetriebes 1, welche aus zwei Anlaufscheiben 6 und aus einem Zahnrad 3 gebildet ist.
**Figur 7** zeigt eine Frontalansicht eines weiteren Ausführungsbeispiels eines Planetengetriebes 50 mit Blick frontal auf die Trägerwange 12.
**Figur 8** zeigt ein Ausführungsbeispiel einer in dem Planetengetriebe 50 verbauten Anlaufscheibe 48 als Einzelteil in einer Frontalansicht.
**Figur 9** zeigt einen Längsschnitt durch die Anlaufscheibe 48 entlang der in Figur 8 eingezeichneten Linie IX IX.
**Figur 10** zeigt einen Längsschnitt durch die Anlaufscheibe 48 entlang der in Figur 1 eingezeichneten Linie X-X.

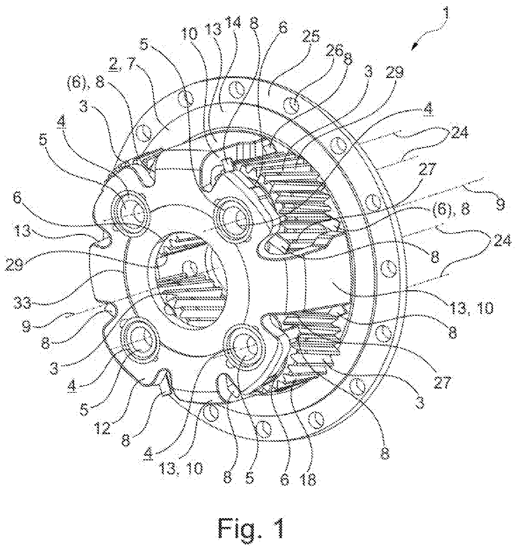

**Figur 1** beschreibt ein Planetengetriebe 1 mit einem Gehäuse 2, mit Planetenrädern 3 und mit Planetenlagerungen 4. Das Gehäuse 2 ist ein Planetenträger 7, welcher aus einer korbartig ausgebildeten Trägerwange 12 und einer Trägerwange 14 mit einem Flansch 25 gebildet ist. Ein plattenartig ausgebildeter Grundkörper 33 der Trägerwange 12 ist mit axial ausgerichteten Verbindungsstegen 13 versehen. Die Trägerwange 12 ist über die Verbindungsstege 13 mit der Trägerwange 14 verbunden. Der Flansch 25 weist Durchgangslöcher 26 zur Befestigung des Planetengetriebes 1 auf.

Zwischen den Verbindungstegen 13 sind taschenartige Fenster 27 ausgebildet. Aus jedem der Fenster 27 ragt die Verzahnung 29 eines Planetenrades 3 heraus. Die Planetenräder 3 sind axial zwischen der Trägerwange 12 und der Trägerwange 14 sowie mit gleichmäßigen Abständen zueinander um die Zentralachse 9, und dabei jede mit radialem Abstand ihrer Planetenachse 24 zur Zentralachse 9 verteilt, in der Trägerwange 12 angeordnet. An der jeweiligen Planetenlagerung 4 sind die Planetenräder 3 mit Planetenzapfen 5 zur einen Seite hin in der Trägerwange 12 und zur anderen Seite hin in der Trägerwange 14 gelagert. Zwischen dem jeweiligen Planetenrad 3 und der Trägerwange 12 bzw. 14 ist jeweils eine in der Darstellung größtenteils verdeckte Anlaufscheibe 6 angeordnet, deren Verdrehsicherungen 8 radial über die Kontur 18 der Verzahnung 29 hinausragen und einem Anschlag 10 gegenüberliegen. Jeder der Verbindungsstege 13 ist ein Anschlag 10 bzw. bildet jeweils einen Anschlag 10 für jeweils vier der Verdrehsicherungen 8 und damit für vier Anlaufscheiben 6. Von den vier Anlaufscheiben 6 sind jeweils zwei der Anlaufscheiben 6 einem Fenster 27 und zwei der Anlaufscheiben 6 einem benachbarten Fenster 27 zugeordnet.

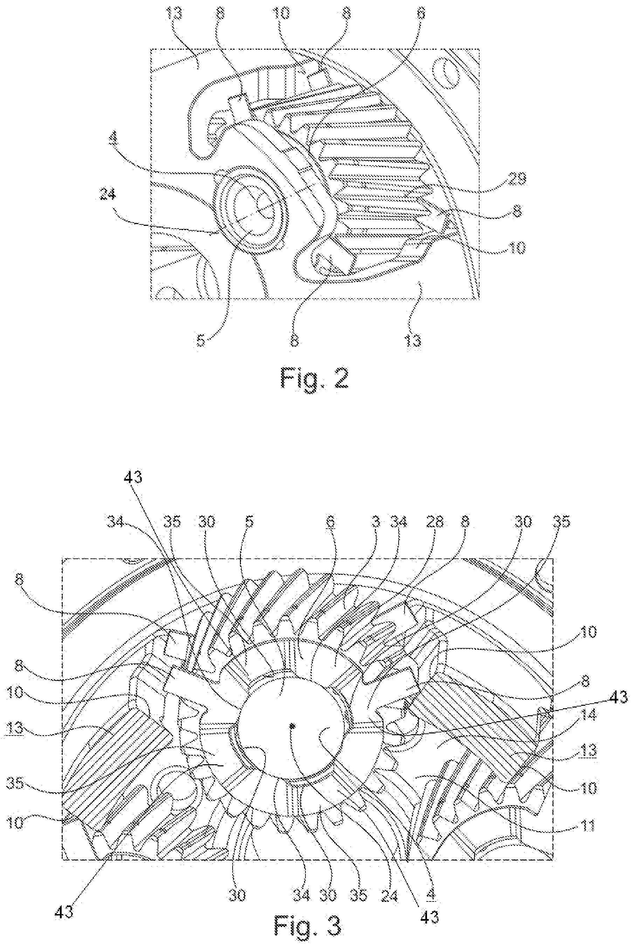

**Figuren 1** **und** **2** Von den Planetenlagerungen 4 sind jeweils nur die Stirnseiten der Planetenzapfen 5 und Verdrehsicherungen 8 der in der Ansicht nahezu verdeckten Anlaufscheiben 6 sichtbar. Es wird in dem dargestellten Beispiel davon ausgegangen, dass die Planetenzapfen 5 als Planetenbolzen ausgeführt sind, auf denen die Planetenräder 3 um die Planetenachsen 24 drehbar gelagert sind. Alternativ können die Planetenzapfen 5 auch einteilig-einmaterialig mit den Planetenrädern 3 ausgebildet sein. Die Anlaufscheiben 6 sind mit laschenartigen Vorsprüngen versehen, welche radial über die Verzahnung 29 des jeweiligen Planetenrades 3 hinausragen und welche an den Anschlägen 10 eine Verdrehsicherung 8 bilden. Die Verbindungsstege 13 sind, wie schon erwähnt, die Anschläge 10.

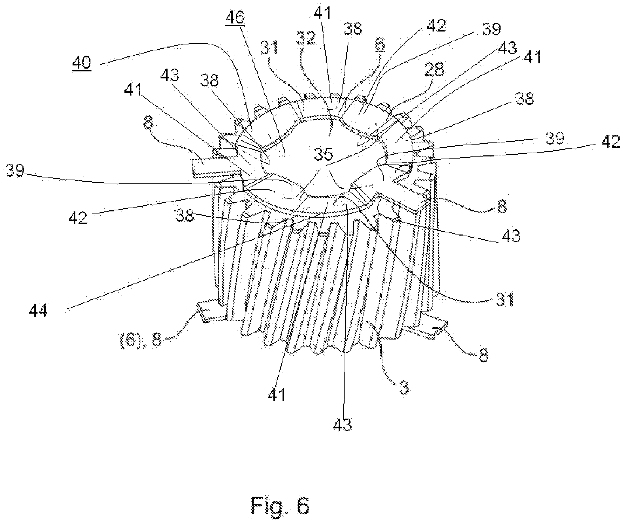

**Figur 6** Die Anlaufscheiben 6 sind aus Blech. Eine Anlaufscheibe 6 ist in dieser Darstellung als Einzelteil auf einem Planetenrad 3 liegend abgebildet. Die andere Anlaufscheibe 6 ist durch das Zahnrad 3 verdeckt. Von der verdeckten Anlaufscheibe 6 sind nur die Verdrehsicherungen 8 sichtbar. Die Anlaufscheibe 6 weist einen Scheibenkörper 28 auf, der ein Durchgangsloch 32 umgibt. An dem Scheibenkörper 28 sind axiale Vertiefungen 31 ausgebildet. Von dem Scheibenkörper 28 ragen radial zwei laschenartig ausgebildete Verdrehsicherungen 8 ab. Die vom Planetenrad 3 abgewandte und im Einbau zum Gehäuse 3 bzw. zum Planetenträger 7 hingewandte erste Seite 40 der Anlaufscheibe 6 weist erste Anlaufflächen 39 auf. Die Anlaufflächen 39 sind an der Frontseite von axialen Auswölbungen 42 ausgebildet. Diese Auswölbungen 42 bilden an der Rückseite der Anlaufflächen 39 rinnenartige Schmierkanäle 43 und begrenzen mit dem Planetenrad 3 einen Öldurchgang, welcher durch den Schmierkanal 43 innen vom Durchgangsloch 32 aus radial nach außen zum Rand 44 verläuft. Die zum Planetenrad 3 hin gewandte und in der Darstellung verdeckte zweite Seite 46 der Anlaufscheibe 6 ist mit zweiten Anlaufflächen 38 versehen, welche in der Darstellung verdeckt sind und welche an der Frontseite von Auswölbungen 41 ausgebildet sind.

Die Frontseite liegt in der Richtung, in welche die Auswölbung 41 axial ausgewölbt ist und schließt diese dort axial ab. Die Auswölbungen 41 bilden in der dargestellten Ansicht nach oben offene Schmierkanäle 43 und begrenzen im Einbauzustand (siehe Figur 1) zusammen mit dem Planetenträger 7 Öldurchgang, welcher innen vom Durchgangsloch 32 aus radial nach außen zum Rand 44 der Anlaufscheibe 6 hin verläuft. Einige der Schmierkänale 43 laufen dabei in radialer Richtung betrachtet radial an der Verdrehsicherung 8 aus, welche sich in beiden Fällen vom radialen Ende der Auswölbung 41 oder 42 in radialer Richtung über den Scheibenkörper 28 hinausragend in radialer Richtung fortsetzt.

**Figur 3** Dargestellt ist eine Sicht aus axialer Richtung auf die Anlaufscheibe 6 einer Planetenlagerung 4 in einer gedachten und nicht dargestellten Radialebene, wobei die Radialebene axial zwischen dem aus dieser Ansicht rausgeschnittenen Grundkörper 33 der Trägerwange 12 und der Anlaufscheibe 6 verläuft. Die Anlaufscheibe 6 ist über Randabschnitte 34 des Durchgangslochs 32 bzw. des Scheibenkörpers 28 auf dem Planetenzapfen 5 geführt. Die Randabschnitte 34 begrenzen in Umfangsrichtung um die Planetenachse 24 die randseitigen Ausnehmungen 30. Die Ausnehmungen 30 schließen sich radial innen an Schmiernuten 35 in der Anlaufscheibe 6 an. Der jeweilige Planetenzapfen 5 ist ein Planetenbolzen und ist in der im Bildhintergrund sichtbaren Trägerwange 14 sowie im Vordergrund (nicht dargestellt) in der Trägerplatte 12 gelagert. Die jeweilige Planetenachse 24 verläuft axial und in der Darstellung nach Figur 3 senkrecht in die Bildebene hinein. Auf die jeweilige Anlaufscheibe 6 folgt in Blickrichtung ein Planetenrad 3. Im Bildhintergrund sind Verdrehsicherungen 8 einer durch das Planetenrad 3 verdeckten und axial zwischen dem Planetenrad 3 und der Trägerwange 14 angeordneten Anlaufscheibe 6 sichtbar.

Die beiden Anlaufscheiben 6 sind mit den Verdrehsicherungen 8 versehen, welche radial als Laschen aus dem Blech der Anlaufscheibe 6 hervorstehen. Dabei schließen die Lappen in eine Umfangsrichtung einen Winkel von 120° zwischen sich ein, der alternativ auch größer oder kleiner als 120° sein kann.

Immer zwischen zwei einander gegenüberliegenden Planetenrädern 3 ist eine Lücke 11 ausgebildet. Zwischen den Trägerwangen 12 und 14 verläuft in jeder Lücke 11 einer der Verbindungsstege 13, welcher einen oder mehrere der Anschläge 10 bildet. In diesem Fall ist der Anschlag 10 an einer dem Planetenrad 3 zugewandten Flanke des Verbindungssteges 13 ausgebildet. Denkbar ist auch, dass zwei der Verbindungsstege in einer Lücke verlaufen. Zwischen den Verdrehsicherungen 8 und den Verbindungsstegen 13 ist ein Schwenkspiel ausgebildet, um welches die Anlaufscheibe 6 auf dem Planetenbolzen um die Planetenachse 24 schwenkbar bis an den jeweiligen Anschlag 10 ist, so dass wahlweise immer nur eine der Verdrehsicherungen 8 der jeweiligen Anlaufscheibe an dem ihr gegenüberliegenden Anschlag 10 anschlagend oder auch keine der Verdrehsicherungen 10 zum Anliegen kommen kann. Sichtbar sind in der Anlaufscheibe 6 ausgebildete Schmierkanäle 43.

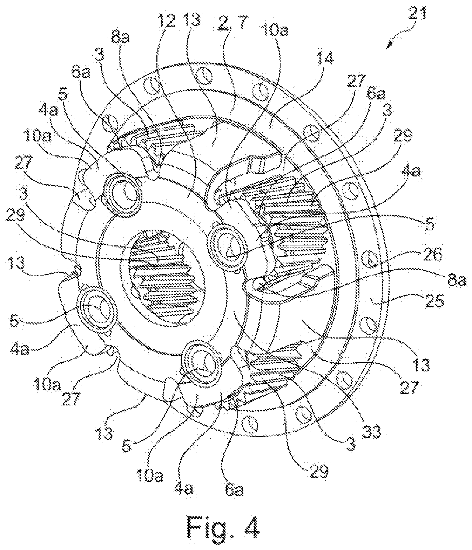

**Figuren 4** Gezeigt ist ein Planetengetriebe 21 mit einem Gehäuse 2, mit Planetenrädern 3 und mit Planetenlagerungen 4a. Das Gehäuse 2 ist ein Planetenträger 7, welcher aus einer korbartig ausgebildeten Trägerwange 12 und aus einer Trägerwange 14 mit einem Flansch 25 gebildet ist. Ein plattenartig ausgebildeter Grundkörper 33 der Trägerwange 12 ist mit axial ausgerichteten Verbindungsstegen 13 versehen. Die Trägerwange 12 ist über die Verbindungsstege 13 mit der Trägerwange 14 verbunden. Der Flansch 25 weist Durchgangslöcher 26 zur Befestigung des Planetengetriebes 21 auf.

Zwischen den Verbindungstegen 13 sind taschenartige Fenster 27 ausgebildet. Aus jedem der Fenster 27 ragt die Verzahnung 29 eines Planetenrades 3 heraus. Die Planetenräder 3 sind axial zwischen der Trägerwange 12 und der Trägerwange 14 sowie mit gleichmäßigen Abständen zueinander verteilt in dem Korb der Trägerwange 12 angeordnet. Die Planetenräder 3 sind mit Planetenzapfen 5 zur einen Seite hin in der Trägerwange 12 und zur anderen Seite hin in der Trägerwange 14 gelagert. Die Planetenräder 3 sind mittels der Planetenlagerungen 4a rotierbar an dem Gehäuse 2 gelagert. Die jeweilige der Planetenlagerungen 4a ist aus dem axial ausgerichteten Planetenzapfen/Planetenbolzen 5 und aus einer Anlaufscheibe 6a gebildet. Die Anlaufscheibe 6a sitzt axial zwischen dem Planetenrad 3 und dem Gehäuse 2 auf dem Planetenzapfen 5, ist mit zwei Verdrehsicherungen 8a versehen und ist mit diesen Verdrehsicherungen 8a gegen Verdrehen relativ zu dem Gehäuse 2 formschlüssig an einem Anschlag 10a gehalten. Der Anschlag 10a ist umfangsseitig zwischen zwei benachbarten Verbindungsstegen 13 ausgebildet und steht, sich, in radialer Richtung von dem Zentrum des Planetengetriebes 21 aus betrachtet, radial außen an den Planetenzapfen 5 anschließend, radial über eine Kontur des Grundkörpers 33 der Trägerwange 12 hervor. Genauer gesagt sind die Anschläger 10a für jeweils eine der Anlaufscheiben 6a an voneinander abgewandte Flanken des Planetenträgers 7 umfangsseitig zwischen zwei benachbarten Verbindungsstegen 13 und an den jeweiligen Planetenzapfen 5 anschließend ausgebildet. Die Flanken sind in Umfangsrichtung gewandte Körperkanten oder Flächen eines radial hervorstehend Trägerabschnitts der Trägerwange 12, an welchem die Planetenzapfen 5 anteilig in der Trägerwange 12 aufgenommen sind.

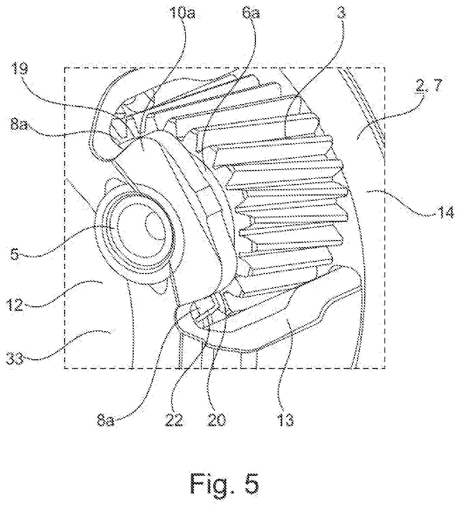

**Figur 5** In der Darstellung sind Abschnitte des als Planetenträger 7 ausgebildeten Gehäuses 2, die Trägerwange 14 und die Trägerwange 12 sichtbar. Der von dem Grundkörper 33 radial hervorstehende jeweilige Anschlag 10a weist Anschlagflächen 19 und 20 auf. Eine Teilfläche der jeweiligen Anschlagfläche 19 oder 20 liegt der Flanke eines Verbindungsstege 13 gegenüber. Eine erste an der jeweiligen Anlaufscheibe 6a ausgebildete Verdrehsicherung 8a in Form einer endseitig flügelartig geschwungen ausgeführten Lasche hintergreift den Anschlag 10a an einer ersten Anschlagseite 19. Eine von der ersten Anschlagseite 19 in Umfangsrichtung abgewandte zweiten Anschlagseite 20 des Anschlags 10a wird von einer ebenfalls endseitig flügelartig geschwungen ausgeführten weiteren Lasche einer weiteren Verdrehsicherung 8a in der entgegengesetzten Umfangsrichtung hintergriffen. Die Flügel 22 der Verdrehsicherungen 8a sind zu diesem Zweck leicht in eine axiale Richtung abgewinkelt.

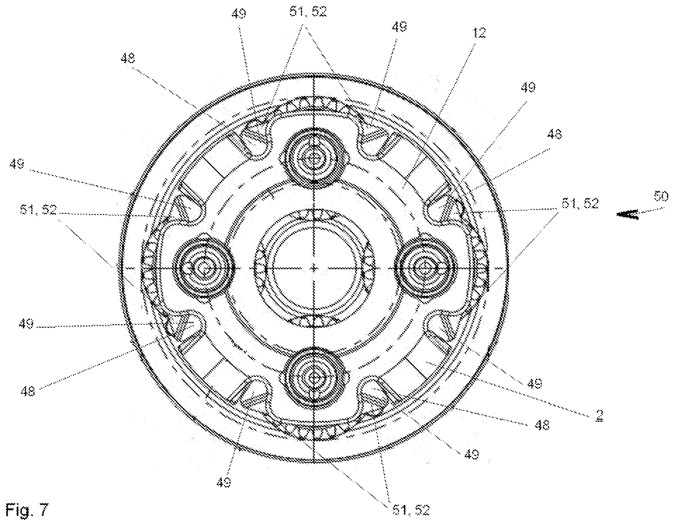

**Figur 7** Der Aufbau des Planetengetriebe 50 ist mit Ausnahme von anders ausgeführten Anlaufscheiben 48 mit dem des in Figur 1 dargestellten Planetengetriebes 1 vergleichbar, d.h. die Anlaufscheiben 6 des in Figur 1 dargestellten Planetengetriebes 1 können ohne weitere bauliche Änderungen gegen die Anlaufscheiben 48 ausgetauscht werden und umgekehrt.

Die Anlaufscheiben 48 sind mit durch Schmiernuten 52 gebildete Schmierkanälen 51 versehen, von denen jeder an einer Verdrehsicherung 49 ausläuft und sich dort, wo die Verdrehsicherungen 49 dem Gehäuse 2 axial nicht mehr gegenüberliegen, in einer Schmiernut 52 bis zum Ende der Verdrehsicherungen 49 hin fortsetzen.

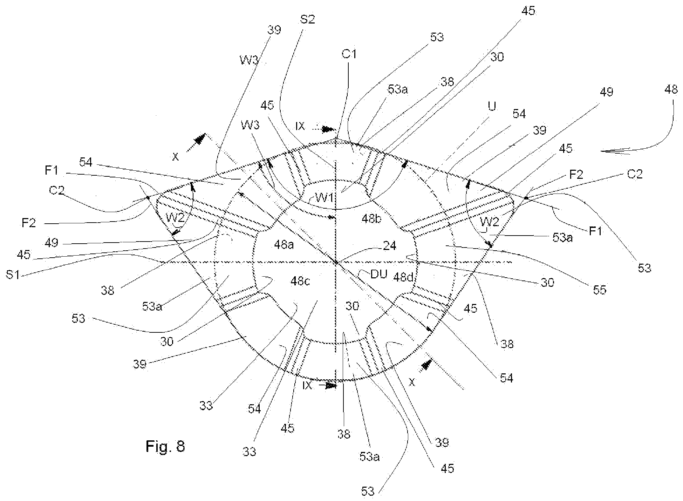

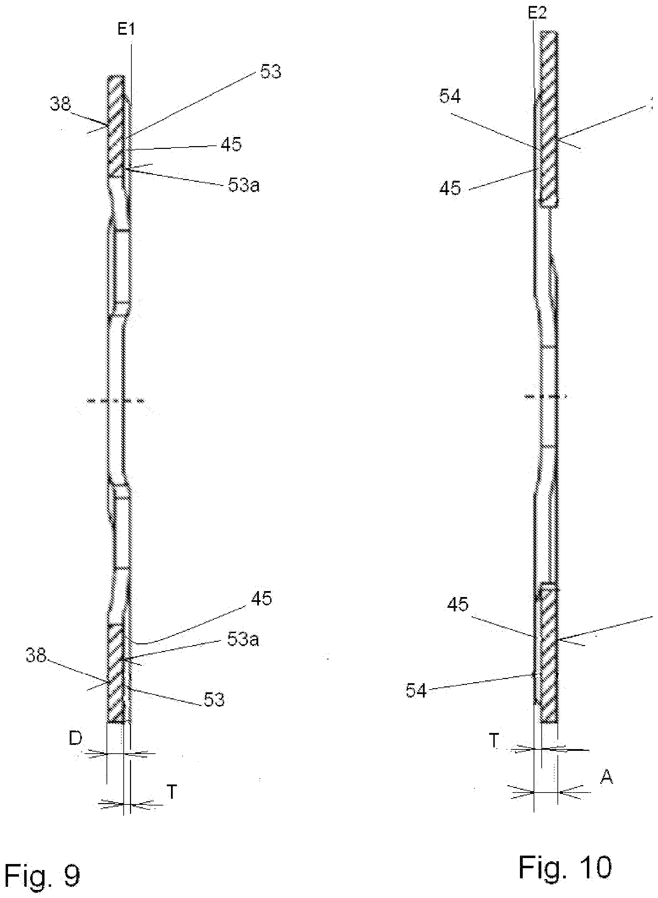

**Figuren 8****,** 9 und 10 Die Anlaufscheibe weist erste Auswölbungen 53 und zu den ersten Auswölbungen 53 umfangsseitig benachbarte zweite Auswölbungen 54 auf. Die Auswölbungen sind aus einem flach in einer Radialebene liegenden scheibenförmigen Scheibenkörper 55 durch Prägen erzeugte axiale Vertiefungen. In dem betrachteten Ausführungsbeispiel sind die ersten Auswölbungen 53 in der Darstellung nach Figur 8 senkrecht in die Bildebene hinein gewölbt und sind nach der Darstellung von Figur 9 aus der Radialebene E1 axial im Bild nach links ausgewölbt. Die zweiten Auswölbungen 54 erheben sich in der Darstellung nach Figur 8 senkrecht in die Bildebene auf die betrachtende Person zu und sind dementsprechend nach der Darstellung von Figur 10 von der Radialebene E2 axial im Bild nach rechts ausgewölbt. An der Frontseite der ersten Auswölbungen 53 sind erste Anlaufflächen 38 ausgebildet, die jeweils in der Darstellung nach Figur 8 verdeckt hinter der Rückseite 53a des Auswölbung 53 liegt. An der Frontseite der zweiten Auswölbungen 54 sind die Anlaufflächen 39 ausgebildet. Daraus ergibt sich, dass die Anlaufflächen 39 jeweils durch eine Auswölbung 53 und die Anlaufflächen 38 durch eine Auswölbungen 54 voneinander getrennt sind. Jeweils eine erste Auswölbung 53 und eine zweite Auswölbung 54 sind durch einen gekröpften Abschnitt 45 miteinander verbunden sind.

**Figur 8** Die Anlaufscheibe 48 weist zwei radial von einem Scheibenkörper 55 abgehende und umfangsseitig um die Mittelachse bzw. Symmetrieachse 24 eines Planetenrades zueinander benachbart am Scheibenkörper 55 ausgebildete Verdrehsicherungen 49 auf, welche einteilig einmaterialig mit dem Scheibenkörper 55 ausgebildet sind.

Die Kontur der Verdrehsicherungen 49 steht radial über eine Außenumfangslinie U des Scheibenkörpers 55 der Anlaufscheibe 48 hinaus. Der Scheibenkörper 55 ist in dem Fall kreisringförmig innen durch die Konturen des Durchgangslochs mit den Ausnehmungen 30 und außen durch die Außenumfangslinie U begrenzt und weist einen Außendurchmesser DU der Außenumfangslinie U auf. Außerdem ist der Scheibenkörper 55 zu den Symmetrieachsen S1 und S2 symmetrisch ausgebildet. Die Symmetrieachse S1 ist horizontal ausgerichtet und die Symmetrieachse S2 vertikal. Die Symmetrieachsen S1 und S2 liegen in einer Radialebene, welche senkrecht von der Planetenachse 24 durchstoßen ist. Die Symmetrieachsen S1 und S2 verlaufen zueinander senkrecht und schneiden sich auf der Planetenachse 24 in einem gemeinsamen Punkt.

Die Kontur der Verdrehsicherungen 49 ist jeweils durch zwei Flankenlinien F1 und F2 begrenzt. Jede Kontur einer der Verdrehsicherungen 49 ist in der Bildebene also jeweils durch eine Flankenlinie F1 und eine Flankenlinie F2 sowie einen Kreisbogen umrissen. Der Kreisbogen verbindet die Flankenlinien F1 und F2 einer Verdrehsicherung 49. Die Verdrehsicherungen 49 sind zueinander symmetrisch ausgebildet und an der Symmetrieachse S2 zueinander spiegelbildlich abgebildet. Die Verlängerungen der Flankenlinien F1 der beiden Verdrehsicherungen 49 schneiden sich dabei in einem gemeinsamen Schnittpunkt C1, welcher auf der Verlängerung der Symmetrieachse S2 liegt und welcher mit radialem Abstand zur Außenkontur der Anlaufscheibe 48 außerhalb dieser liegt. Dabei schließen die Flankenlinien F1 und F1 der benachbarten Verdrehsicherungen 49 einen stumpfen Winkel W1 zwischen sich und die Flankenlinien F1 und F2 an jeweils einer der Verdrehsicherungen 49 einen spitzen Winkel W2 zwischen sich und der Symmetrieachse S2 ein. Die beiden Flankenlinien F1 beider Verdrehsicherungen 49 gehen wahlweise an einer die Außenkontur der Anlaufscheibe an dieser Stelle beschreibenden und radial unterhalb des Schnittpunktes C1 verlaufenden Geraden oder alternativ an einer bogenförmigen Linie (nicht dargestellt) der Außenkontur der Anlaufscheibe 48 ineinander über.

Die jeweilige Verlängerung der Flankenlinie F1 der einen Verdrehsicherung 49 schneidet die Verlängerung ihrer Flankenlinie F2 in einem Schnittpunkt C2, welcher auf der Symmetrieachse S1 und radial außerhalb der Außenkontur der Anlaufscheibe 48 liegt. Die Konturlinien F1 und F2 der jeweiligen Verdrehsicherung 49 und schließen einen spitzen Winkel W2 zwischen sich ein.

Die Anlaufscheibe 48 ist geometrisch in Viertelsektionen 48a 48d aufgeteilt. Die Viertelsektionen 48a 48d grenzen an den Symmetrieachse S1 und S2 aneinander an und sind am innerhalb der von der Umfangslinie U beschriebenen Scheibenkörper 55 zueinander symmetrisch ausgeführt. Außerhalb der Umfangslinie U sind die oberhalb der Symmetrieachse S1 liegenden Außenkonturen der Viertelsektionen 48a und 48b radial nach außen jeweils durch eine vollständige Flankenlinie F1 und einen Anteil einer Flankenlinie F2 begrenzt. Unterhalb der Symmetrieachse S1 sind die Außenkonturen Viertelsektionen 48c und 48d jeweils durch einen Anteil einer Flankenlinie F2 und einen Anteil einer Bogenlinie begrenzt. Die Bogenlinie liegt auf der Umfangslinie U. Die jeweilige Flankenlinie F2 geht in der jeweiligen Viertelsektion 48c und 48d in die Bogenlinie über, so dass sich die Konturen der Verdrehsicherungen jeweils auch bis in die unterhalb der Symmetrielachse S1 liegenden Viertelsektion 48c bzw. 48d erstrecken. Der von der Planetenachse 24 ausgehende Radius der Bogenlinie entspricht der Hälfte des Durchmessers DU der Außenumfangslinie. In jeder der Viertelsektionen 48a 48d ist eine der Auswölbungen 54 einmal vollständig ausgebildet. Jede der Viertelsektionen 48a 48d weist weiterhin jeweils zweimal einen Anteil je einer der Auswölbungen 53 auf. Die Auswölbungen 54 der Viertelsektionen 48a und 48b setzen sich dabei in der Verdrehsicherungen 49 bis zur Außenkontur der Anlaufscheibe 48 und damit der Verdrehsicherung 49 an der Stelle fort. Darüber hinaus setzt sich jeweils eine Auswölbung 53, die an der Symmetrieachse S1 verlaufend anteilig in einer Viertelsektion 48a und 48d bzw. 48b und 48d ausgebildet ist, radial bis nach außen bis zur Außenkontur der jeweiligen Verdrehsicherung 49 und damit Außenkontur der Anlaufscheibe 48 hin fort. Damit ergibt sich, dass in dem mit Figur 7 dargestellten Planetengetriebe wenigstens ein zumindest einseitig durch die Anlaufscheibe (48) begrenzter Schmierkanal (43) radial nach außen bis an Teilstreckenabschnitte der die Verdrehsicherung 49 radial außen begrenzende Konturlinien F1, F2 der Außenkonturen der Verdrehsicherungen 49- d.h., dass der Schmierkanal 43 bzw. die Auswölbungen 53, 54 sich radial bis ans Ende/bis an die Spitze der Verdrehsicherungen 49 über den Kontakt mit dem Planetenrad und/oder dem Planetenträger hin fortsetzen.

**Figuren 9 und 10** Das Blech der Anlaufscheibe 48 weist eine Blechdicke D auf. Die Gesamtdicke A der Anlaufscheibe 48 setzt sich aus der Blechdicke D und dem axialen Versatz T zusammen. Der axiale Versatz T ist ein Maß für die Tiefe des Auswölbungen 53 und 54 und ist in dem Fall geringer als die Blechdicke D.

### Bezugszeichenliste

- 1: Planetengetriebe
- 2: Gehäuse
- 3: Planetenrad
- 4: Planetenlagerung
- 4a: Planetenlagerung
- 5: Planetenzapfen
- 6: Anlaufscheibe
- 6a: Anlaufscheibe
- 7: Planetenträger
- 8: Verdrehsicherung
- 8a: Verdrehsicherung
- 9: Zentralachse
- 10: Anschlag
- 10a: Anschlag
- 11: Lücke zwischen den Planetenrädern
- 12: Trägerwange des Planetenträgers
- 13: Verbindungssteg des Planetenträgers
- 14: Trägerwange des Planetenträgers
- 15: nicht belegt
- 16: erste Seite der Anlaufscheibe
- 17: zweite Seite der Anlaufscheibe
- 18: Kontur des Planetenrades bzw. der Verzahnung des Planetenrades
- 19: erste Anschlagseite
- 20: zweite Anschlagseite
- 21: Planetengetriebe
- 22: Flügel der Verdrehsicherung
- 23: Anschlag
- 24: Planetenachse
- 25: Flansch der Trägerwange
- 26: Durchgangsloch des Flansches
- 27: Fenster
- 28: Scheibenkörper der Anlaufscheibe
- 29: Verzahnung des Planetenrades
- 30: Ausnehmungen an der Anlaufscheibe
- 31: Vertiefungen in der Anlaufscheibe
- 32: Durchgangsloch in der Anlaufscheibe
- 33: Grundkörper der Trägerwange
- 34: Randabschnitt
- 35: Schmiernut
- 36: nicht belegt
- 37: nicht belegt48
- 38: zweite Anlauffläche der Anlaufscheibe
- 39: erste Anlauffläche der Anlaufscheibe
- 40: erste Seite der Anlaufscheibe
- 41: erste Auswölbung der Anlaufscheibe
- 42: zweite Auswölbung der Anlaufscheibe
- 43: Schmierkanal an der Anlaufscheibe
- 44: Rand der Anlaufscheibe
- 45: gekröpfter Abschnitt der Anlaufscheibe
- 46: zweite Seite der Anlaufscheibe
- 47: nicht belegt
- 48: Anlaufscheibe
- 48a: Viertelsektion der Anlaufscheibe
- 48b: Viertelsektion der Anlaufscheibe
- 48c: Viertelsektion der Anlaufscheibe
- 48d: Viertelsektion der Anlaufscheibe
- 49: Verdrehsicherung
- 50: Planetengetriebe
- 51: Schmierkanal
- 52: Schmiernut
- 53: erste Auswölbung an der Anlaufscheibe
- 53a: Rückseite der Auswölbung
- 54: zweite Auswölbung an der Anlaufscheibe
- 55: Scheibenkörper der Anlaufscheibe
- A: axialer Versatz
- C1: Schnittpunkt der Flankenlinien
- C2: Schnittpunkt der Flankenlinien
- D: Blechdicke
- DU: Durchmesser der Außenumfangslinie
- F1: Flankenlinie
- F2: Flankenlinie
- G: Gerade
- S1: Symmetrieachse
- S2: Symmetrieachse
- T: Tiefe der Auswölbung
- U: Außenumfangslinie des Scheibenkörpers
- W1: Winkel zwischen den Flankenlinien
- W2: Winkel zwischen den Flankenlinien

## Patentansprüche

1. Planetengetriebe (1, 21, 50) mit einem Gehäuse (2), mit Planetenrädern (3) und mit Planetenlagerungen (4, 4a), wobei die Planetenräder (3) mittels der Planetenlagerungen (4, 4a) rotierbar um eine axial ausgerichtete Planetenachse (24) an dem Gehäuse (2) gelagert sind und wobei zumindest eine der Planetenlagerungen (4, 4a) aus wenigstens einem axial ausgerichteten Planetenzapfen (5) und einer Anlaufscheibe (6, 6a, 48) gebildet ist, wobei die Anlaufscheibe (6, 6a, 48) axial zwischen dem Planetenrad (3) und dem Gehäuse (2) auf dem Planetenzapfen (5) sitzt und ferner an einer dem Gehäuse (2) zugewandten ersten Seite (16) erste Anlaufflächen (39) und an einer dem Planetenrad (3) zugewandten zweiten Seite (17) umfangsseitig zu den ersten Anlaufflächen (39) versetzte zweite Anlaufflächen (38) aufweist, wobei jeweils axial rückseitig der Anlaufflächen (38, 39) ein rinnenartig geformter Schmierkanal (43) an der Anlaufscheibe (6, 6a, 48) ausgebildet ist, wobei der Schmierkanal (43) aus Richtung des Planetenzapfens (5) radial nach außen bis an einen die Anlaufscheibe (6, 6a, 48) radial außen begrenzenden Rand (44) der Anlaufscheibe (6, 6a, 48) hin verläuft,
**dadurch gekennzeichnet, dass**
die Anlaufscheibe (6, 6a, 48) mit Hilfe von zwei an der Anlaufscheibe (6, 6a, 48) ausgebildeten Verdrehsicherungen (8, 49), und dabei jede der Verdrehsicherungen (8, 49) jeweils einem Anschlag (10, 10a) des Gehäuses (2) gegenüberliegend, gegen Verdrehen um die Planetenachse (24) gesichert ist, wobei wenigstens eine der Verdrehsicherungen (8, 49) radial vom Planetenzapfen (5) weg gerichtet radial über eine wenigstens eines der Planetenräder (3) außen begrenzende Kontur (18) des wenigstens einen Planetenrades (3) hinaus hervor steht,
und der zumindest einseitig durch die Anlaufscheibe (48) begrenzte Schmierkanal (43) radial nach außen bis an mindestens eine die Verdrehsicherung (49) radial außen begrenzende Konturlinie (F1, F2) einer die Verdrehsicherung (49) außen umgebenden und begrenzenden Außenkontur verläuft.

2. Planetengetriebe (1, 21, 50) nach Anspruch 1, **dadurch gekennzeichnet, dass** der Schmierkanal (43) jeweils zwischen zwei umfangsseitig zueinander benachbarten ersten Anlaufflächen (39) der Anlaufscheibe (6, 48) verläuft.

3. Planetengetriebe (1, 21, 50) nach Anspruch 1 oder 2, **dadurch gekennzeichnet, dass** der Schmierkanal (43) an wenigstens einer der Verdrehsicherungen (8, 49) einer Anlaufscheibe (6, 48) ausläuft.

4. Planetengetriebe (1, 21, 50) nach Anspruch 1 oder 2, in welchem zumindest ein Gehäuseabschnitt des Gehäuses (2) als Planetenträger (7) mit wenigstens zwei axial über Verbindungsstege (13) verbundenen Trägerwangen (12, 14) des Planetenträgers (7) ausgebildet ist, **dadurch gekennzeichnet, dass** der Anschlag (10) ein axial aus einer Trägerwange (12) des Planetenträgers (7) in Richtung einer weiteren Trägerwange (14) hervorstehender Verbindungssteg (13) ist.

5. Planetengetriebe (1, 21, 50) nach Anspruch 4, **dadurch gekennzeichnet, dass** jeder der Verbindungsstege (13) jeweils mindestens einen Anschlag (10) für eine an ein und derselben Anlaufscheibe (6, 48) ausgebildeten Verdrehsicherung (8, 49) von zwei an der Anlaufscheibe (6, 49) ausgebildeten Verdrehsicherungen (8, 49) aufweist.

6. Planetengetriebe (1, 21, 50) nach Anspruch 1 oder 2, in welchem zumindest ein Gehäuseabschnitt des Gehäuses (2) als Planetenträger (7) mit mindestens zwei Trägerwangen (12, 14) ausgebildet ist, und die Trägerwangen (12, 14) axial mittels Verbindungsstegen (13) verbunden sind, **dadurch gekennzeichnet, dass** zwei voneinander abgewandte Flanken des Planetenträgers (7) die Anschläge (10a) für die Verdrehsicherungen (8a) einer Anlaufscheibe (6a) sind, wobei die Anschläge (10a) umfangsseitig zwischen zwei benachbarten Verbindungsstegen (13) und dabei umfangsseitig an den Planetenzapfen (5) anschließend ausgebildet sind.

7. Planetengetriebe (1, 21, 50) nach Anspruch 1 oder 2, **dadurch gekennzeichnet, dass** die Anlaufscheibe (6, 6a, 48) zwei radial von einem Scheibenkörper (28, 55) abgehende, und umfangsseitig um eine Planetenachse (24) eines Planetenrades (3) zueinander benachbart am Scheibenkörper (28, 55) ausgebildete Verdrehsicherungen (8, 8a, 49) aus einem Material der Anlaufscheibe (6, 6a, 48) aufweist, wobei eine erste der Verdrehsicherungen (8, 8a, 49) an einem ersten Anschlag (10) anliegt und eine zweite und an der gleichen Anlaufscheibe (6, 6a, 48) ausgebildete zweite Verdrehsicherung (8, 8a, 49) an einem dem ersten Anschlag (10) gegenüberliegenden oder von diesem ersten Anschlag (10a), abgewandten zweiten Anschlag (10a) anliegt.

8. Planetengetriebe (1, 21, 50) mit der Anlaufscheibe (48) nach Anspruch 1, wobei die Anlaufscheibe (50) erste Auswölbungen (53) und zu den ersten Auswölbungen (53) umfangsseitig benachbarte zweite Auswölbungen (54) aufweist, wobei an den Auswölbungen (53, 54) Anlaufflächen (38, 39) für Gleitkontakt mit einem Planetenträger (7) oder einem Planetenrad (3) ausgebildet sind, **dadurch gekennzeichnet, dass** die Anlaufscheibe (48) zwei radial von einem Scheibenkörper (55) abgehende, und umfangsseitig um eine Symmetrieachse (24) des Scheibenkörpers (55) zueinander benachbart am Scheibenkörper (55) ausgebildete Verdrehsicherungen (49) aus einem Material der Anlaufscheibe (48) aufweist, wobei die Verdrehsicherungen (49) radial über einen den Außenumfang eines Scheibenkörpers (55) der Anlaufscheibe (50) hinausstehende Vorsprünge sind.

## Claims

1. A planetary gearbox (1, 21, 50) comprising a housing (2), planet gears (3) and planet bearings (4, 4a), the planet gears (3) being rotatably mounted on the housing (2) about an axially oriented planet axis (24) by means of the planet bearings (4, 4a) and at least one of the planet bearings (4, 4a) being formed of at least one axially oriented planet pin (5) and a thrust washer (6, 6a, 48), the thrust washer (6, 6a, 48) being seated axially between the planet gear (3) and the housing (2) on the planet pin (5) and furthermore having first thrust surfaces (39) on a first side (16) facing the housing (2) and second thrust surfaces (38) circumferentially offset relative to the first thrust surfaces (39) on a second side (17) facing the planet gear (3),
a groove-shaped lubrication channel (43) being formed on the thrust washer (6, 6a, 48) axially on the rear side of each of the thrust surfaces (38, 39), the lubrication channel (43) extending radially outwards from the direction of the planet pin (5) to an edge (44) of the thrust washer (6, 6a, 48) which radially outwardly delimits the thrust washer (6, 6a, 48),
**characterised in that**
the thrust washer (6, 6a, 48) is secured against rotation about the planet axis (24) by way of two antirotation means (8, 49) formed on the thrust washer (6, 6a, 48), each of the antirotation means (8, 49) being opposite a limit stop (10, 10a) on the housing (2),
wherein at least one of the antirotation means (8, 49) is directed radially away from the planet pin (5) and projects radially beyond a contour (18), outwardly delimiting at least one of the planet gears (3), of the at least one planet gear (3),
and the lubrication channel (43), which is delimited at least on one side by the thrust washer (48), extends radially outwards to at least one contour line (F1, F2), radially outwardly delimiting the antirotation means (49), of an outer contour outwardly surrounding and delimiting the antirotation means (49).

2. The planetary gearbox (1, 21, 50) according to claim 1, **characterised in that** the lubrication channel (43) extends in each case between two circumferentially mutually adjacent first thrust surfaces (39) of the thrust washer (6, 48).

3. The planetary gearbox (1, 21, 50) according to claim 1 or 2, **characterised in that** the lubrication channel (43) terminates at at least one of the antirotation means (8, 49) of a thrust washer (6, 48).

4. The planetary gearbox (1, 21, 50) according to claim 1 or 2, in which at least one housing portion of the housing (2) is configured as a planet carrier (7) with at least two carrier cheeks (12, 14) of the planet carrier (7) axially connected via connecting pieces (13), **characterised in that** the limit stop (10) is a connecting piece (13) projecting axially from one carrier cheek (12) of the planet carrier (7) in the direction of a further carrier cheek (14).

5. The planetary gearbox (1, 21, 50) according to claim 4, **characterised in that** each of the connecting pieces (13) has at least one limit stop (10) for one antirotation means (8, 49), formed on one and the same thrust washer (6, 48), of two antirotation means (8, 49) formed on the thrust washer (6, 49).

6. The planetary gearbox (1, 21, 50) according to claim 1 or 2, in which at least one housing portion of the housing (2) is configured as a planet carrier (7) with at least two carrier cheeks (12, 14), and the carrier cheeks (12, 14) are axially connected by means of connecting pieces (13), **characterised in that** two flanks facing away from one another of the planet carrier (7) are the limit stops (10a) for the antirotation means (8a) of a thrust washer (6a), wherein the limit stops (10a) are formed circumferentially between two adjacent connecting pieces (13) and circumferentially adjacent the planet pin (5).

7. The planetary gearbox (1, 21, 50) according to claim 1 or 2, **characterised in that** the thrust washer (6, 6a, 48) has two antirotation means (8, 8a, 49) made of a material of the thrust washer (6, 6a, 48), protruding radially from a washer body (28, 55) and formed adjacent one another on the washer body (28, 55) circumferentially around a planet axis (24) of a planet gear (3), wherein a first one of the antirotation means (8, 8a, 49) rests against a first limit stop (10) and a second antirotation means (8, 8a, 49) formed on the same thrust washer (6, 6a, 48) rests against a second limit stop (10a) opposite the first limit stop (10) or facing away from this first limit stop (10a).

8. The planetary gearbox (1, 21, 50) comprising the thrust washer (48) according to claim 1, wherein the thrust washer (50) has first bulges (53) and second bulges (54) circumferentially adjacent the first bulges (53), thrust surfaces (38, 39) for sliding contact with a planet carrier (7) or a planet gear (3) being formed on the bulges (53, 54), **characterised in that** the thrust washer (48) has two antirotation elements (49) made of a material of the thrust washer (48), protruding radially from a washer body (55) and formed adjacent one another on the washer body (55) circumferentially about an axis of symmetry (24) of the washer body (55), wherein the antirotation elements (49) are projections projecting radially beyond the outer circumference of a washer body (55) of the thrust washer (50).

## Revendications

1. Boîte de vitesses à trains planétaires (1, 21, 50) comprenant un carter (2), des pignons satellites (3) et des roulements de planétaire (4, 4a), dans laquelle les pignons satellites (3) sont montés de manière rotative sur le carter (2) autour d'un axe planétaire (24) orienté axialement au moyen des roulements de planétaire (4, 4a) et dans laquelle au moins un des roulements de planétaire (4, 4a) est formé d'au moins un tourillon planétaire (5) orienté axialement et d'une rondelle de friction (6, 6a, 48), dans laquelle la rondelle de friction (6, 6a, 48) est située axialement entre le pignon satellite (3) et le carter (2) sur le tourillon planétaire (5) et comporte en outre des premières surfaces de friction (39) sur une première face (16) faisant face au carter (2) et des secondes surfaces de friction (38) décalées de manière circonférentielle par rapport aux premières surfaces de friction (39) sur une seconde face (17) faisant face au pignon satellite (3),
dans laquelle, respectivement un canal de lubrification (43) en forme de rainure est formé axialement sur la face arrière des surfaces de friction (38, 39) sur la rondelle de friction (6, 6a, 48), dans laquelle le canal de lubrification (43) s'étend radialement vers l'extérieur à partir de la direction du tourillon planétaire (5) jusqu'à un bord (44) de la rondelle de friction (6, 6a, 48) délimitant radialement vers l'extérieur la rondelle de friction (6, 6a, 48),
**caractérisée en ce que**
la rondelle de friction (6, 6a, 48) est fixée contre la rotation autour de l'axe planétaire (24) à l'aide de deux moyens antirotation (8, 49) formés sur la rondelle de friction (6, 6a, 48), et chacun des moyens antirotation (8, 49) est respectivement opposé à une butée (10, 10a) du carter (2),
dans laquelle l'au moins un des moyens antirotation (8, 49), orienté radialement à l'opposé de l'axe planétaire (5), fait saillie radialement à partir d'un contour (18), de l'au moins un pignon satellite (3), définissant la limite extérieure de l'au moins un des pignons satellites (3),
et le canal de lubrification (43), limité au moins d'un côté par la rondelle de friction (48), s'étend radialement vers l'extérieur jusqu'à au moins une ligne de contour (F1, F2), délimitant radialement vers l'extérieur le moyen antirotation (49), d'un contour extérieur entourant et délimitant radialement le moyen antirotation (49).

2. Boîte de vitesses à trains planétaires (1, 21, 50) selon la revendication 1, **caractérisée en ce que** le canal de lubrification (43) s'étend respectivement entre deux premières surfaces de friction (39) adjacentes de manière circonférentielle de la rondelle de friction (6, 48).

3. Boîte de vitesses à trains planétaires (1, 21, 50) selon la revendication 1 ou 2, **caractérisée en ce que** le canal de lubrification (43) se termine au niveau de l'au moins un des moyens antirotation (8, 49) d'une rondelle de friction (6, 48).

4. Boîte de vitesses à trains planétaires (1, 21, 50) selon la revendication 1 ou 2, selon laquelle au moins une section du carter (2) est conçue sous la forme d'un porte-satellites (7) comportant au moins deux brides de support (12, 14) du porte-satellites (7) reliées axialement à l'aide des nervures de liaison (13), **caractérisée en ce que** la friction (10) est une nervure de liaison (13) faisant saillie axialement d'une bride de support (12) du porte-satellites (7) dans la direction d'une autre bride de support (14).

5. Boîte de vitesses à trains planétaires (1, 21, 50) selon la revendication 4, **caractérisée en ce que** chacune des nervures de liaison (13) comporte respectivement au moins une butée (10) pour un moyen antirotation (8, 49) formé sur une même rondelle de friction (6, 48) parmi les deux moyens antirotation (8, 49) formés sur la rondelle de friction (6, 49).

6. Boîte de vitesses à trains planétaires (1, 21, 50) selon la revendication 1 ou 2, dans laquelle l'au moins une section du carter (2) est conçue sous la forme du porte-satellites (7) comportant les au moins deux brides de support (12, 14) et lesdites brides de support (12, 14) sont reliées axialement au moyen des nervures de liaison (13), **caractérisée en ce que** deux flancs opposés l'un à l'autre du porte-satellites (7) constituent les butées (10a) pour les moyens antirotation (8a) d'une rondelle de friction (6a), dans laquelle lesdites butées (10a) sont formées de manière circonférentielle entre deux nervures de liaison (13) adjacentes et ainsi reliées de manière circonférentielle au tourillon planétaire (5).

7. Boîte de vitesses à trains planétaires (1, 21, 50) selon la revendication 1 ou 2, **caractérisée en ce que** la rondelle de friction (6, 6a, 48) comporte deux moyens antirotation (8, 8a, 49) partant radialement d'un corps de rondelle (28, 55) et formés de manière circonférencielle autour d'un axe planétaire (24) d'un pignon satellite (3), adjacents l'un à l'autre sur le corps de rondelle (28, 55), en une matière de la rondelle de friction (6, 6a, 48), dans laquelle un premier des moyens antirotation (8, 8a, 49) vient en appui sur une première butée (10) et un second, et formé sur la même rondelle de friction (6, 6a, 48), second moyen antirotation (8, 8a, 49) vient en appui sur une seconde butée (10a) opposée à la première butée (10) ou plus éloignée de ladite première butée (10a).

8. Boîte de vitesses à trains planétaires (1, 21, 50) comportant la rondelle de friction (48) selon la revendication 1, dans laquelle la rondelle de friction (50) comporte des premiers renflements (53) et des seconds renflements (54) adjacents de manière circonférentielle aux premiers renflements (53), dans laquelle des surfaces de friction (38, 39) destinées au contact glissant avec le porte-satellites (7) ou un pignon satellite (3) sont formées sur les renflements (53, 54), **caractérisée en ce que** la rondelle de friction (48) comporte deux moyens antirotation (49) s'étendant radialement à partir du corps de rondelle (55) et formés de manière circonférentielle, adjacents l'un à l'autre sur le corps de rondelle (55) autour d'un axe de symétrie (24) du corps de rondelle (55), en matière de la rondelle de friction (48), dans laquelle les moyens antirotation (49) sont des projections faisant radialement saillie de la circonférence extérieure du corps de rondelle (55) de la rondelle de friction (50).
